Europäisches Patentamt

European Patent Office

Office européen des brevets

(11) Veröffentlichungsnummer: **0 272 613 B1**

# (12) EUROPÄISCHE PATENTSCHRIFT

(45) Veröffentlichungstag der Patentschrift: **20.02.91**

(51) Int. Cl.⁵: **G05B 19/405**, G05B 19/417

(21) Anmeldenummer: **87118702.7**

(22) Anmeldetag: **16.12.87**

(54) Verfahren und Vorrichtung zur Überprüfung der Genauigkeit programmierter Bewegungen eines Roboters.

(30) Priorität: **22.12.86 DE 3644017**

(43) Veröffentlichungstag der Anmeldung:
**29.06.88 Patentblatt 88/26**

(45) Bekanntmachung des Hinweises auf die
Patenterteilung:
**20.02.91 Patentblatt 91/08**

(84) Benannte Vertragsstaaten:
**DE ES FR GB IT NL SE**

(56) Entgegenhaltungen:
**DE-A- 3 000 184**
**DE-A- 3 438 007**
**GB-A- 2 168 174**

(73) Patentinhaber: **Behr Industrieanlagen GmbH & Co.**
**Rosenstrasse 39**
**D-7120 Bietigheim-Bissingen(DE)**

(72) Erfinder: **Schweiker, Werner**
**Haldenstrasse 12b**
**CH-2540 Grenchen(CH)**
Erfinder: **Corbetti, Reto**
**Ruffini Strasse 7**
**CH-2540 Grenchen(CH)**

(74) Vertreter: **Heusler, Wolfgang, Dipl.-Ing. et al**
**Dr. Dieter von Bezold Dipl.-Ing. Peter Schütz**
**Dipl.-Ing. Wolfgang Heusler Brienner Strasse 52**
**D-8000 München 2(DE)**

Rank Xerox (UK) Business Services

## Beschreibung

Aus der DE 3438007A1 ist es bekannt, zur Diagnose der dynamischen und statischen Bahngenauigkeit numerisch gesteuerter Maschinen auf dem Monitor der Steuerung die Soll- und Ist-Wertbahnkurven von zwei ausgewählten Achsen darzustellen. Die Soll- und Ist-Werte werden hierzu gezielt abgespeichert und nach dem Verfahren der Achsen übereinanderliegend in einem Koordinatenkreuz maßstabsgerecht dargestellt. Durch Kennzeichnung einzelner Soll-Werte mit den dazugehörenden Ist-Werten können die Einzeldaten verfolgt, ausgewählt und als Einzelgrößen dargestellt werden, wobei ausgewählte Bahnabschnitte sich auch vergrößert darstellen lassen, so daß Abweichungen besser erkannt und analysiert werden können. Über die Gewinnung der Ist-Bahnkurven für den Vergleich sind in dieser Literaturstelle keine Angaben gemacht.

Eine Bahnüberwachung für numerisch gesteuerte Werkzeugmaschinen ist ferner aus der DE3000184A1 bekannt, wo zur Feststellung unzulässiger Abweichungen das tatsächliche Verhalten von Lage-Regel-kreisen mit dem erwarteten Übertragungsverhalten eines Lage-Regelmodells für den Fall einer sprunghaften Änderung speziell der Vorschub-Soll-Geschwindigkeit verglichen wird.

Bei der Endprüfung von Robotern vor ihrem Einsatz entfällt ein großer Teil der gesamten Funktionsprüfungen auf Bahntestprogramme, mit denen festgestellt wird, ob der Roboter die programmierten Bewegungen auch richtig ausführt, also das vom Roboter betätigte Werkzeug die gewünschten Bewegungsbahnen räumlich und zeit-lich genau einhält. Je nach Art der unterschiedlichen Kinematiken kann man hierzu verschiedene Meßverfahren anwenden, die jedoch recht aufwendig und zeitraubend sind und daher nur bei der Endkontrolle und Abnahme durchgeführt werden. Solche Überprüfungen ver = bieten sich aber sowohl aus Kostengründen als auch wegen des notwendigen Zeitaufwandes bei der normalen Produktion, da die Prüfeinrichtungen eigens auf- und abgebaut werden müssen, was länger dauert als die Pausen zwischen den Schichten des Robotereinsatzes. Die Überprüfung würde somit einen Produktionsausfall zur Folge haben. Auch sind die Prüfeinrichtungen meist empfindlich gegen Verschmutzungen, wie sie im Produktionsbereich häufig auftreten.

Der im Anspruch 1 angegebenen Erfindung liegt die Aufgabe zugrunde, ein für die Praxis ausreichendes Prüfsystem anzugeben, welches in den bei der normalen Produktion auftretenden Pausen eine schnelle Überprüfung der räumlichen und zeitlichen Bahntreue der Bewegung und der Achsengeschwindigkeit eines robotergesteuerten Werkzeugs erlaubt,die ohne Produktionsunterbrechung möglich ist, nicht für jede Überprüfung eigens installiert werden muß und nicht verschmutzungsanfällig ist.

Zwar erlauben interne Rückkoppelungen des Roboters auch im späteren Betrieb eine Kontrolle der Bewegungen aufgrund von Tachometersignalen der bewegten Glieder des Roboters auf Übereinstimmung mit dem Programm, jedoch wird dabei das vom Roboter betätigte Werkzeug selbst nicht erfaßt, so daß bei Veränderungen der Werkzeugjustierung, etwa durch Verbiegen von Teilen des Werkzeugs, Bahnabweichungen des Werkzeugs auftreten können, welche bei diesen internen Kontrollen nicht bemerkt werden, sondern erst am fehlerhaften Werkstück offenbar werden.

Der Grundgedanke der Erfindung liegt darin, sowohl räumlich feste Kontrollpunkte in der Bewegungsbahn des Roboterwerkzeugs vorzusehen und festzustellen, ob und wann das Werkzeug an diesen Kontrollpunkten eintrifft, und die entsprechenden Zeitpunkte mit zugehörigen Soll-Zeitpunkten zu vergleichen, als auch den zeitlichen Ablauf der Roboterachsgeschwindigkeiten anhand der Tachometersignale festzustellen und mit den Sollgeschwindigkeiten zu vergleichen. Die kontrollpunkte können zweckmäßigerweise in Form einer räumlich festen Matrix angeordnet sein, welche durch Kreuzungspunkte von Strahlen gebildet wird, die von Strahlensendern ausgehen und von Detektoren erfaßt werden, wobei sich die Sensorsignale ändern, wenn das Werkzeug die Strahlen passiert. Die Sensorsignale und Geschwindigkeitssignale (d.h. Tachometersignale) lassen sich in einem Diagramm protokollieren, in dem Unterbrechungen der einzelnen Strahlen zu verschiedenen Zeitpunkten und GeschwindigkeitsSignale ersichtlich sind, und dieses Ist-Protokoll läßt sich relativ einfach mit einem Soll-Protokoll vergleichen - bei gleichem Maßstab durch einfaches Übereinanderlegen transparenter Aufzeichnungspapiere - wobei Abweichungen sofort ersichtlich werden. Dieser Vorgang kann durch den Rechner im Testsystem automatisiert werden. Die Abweichungen zwischen Ist- und Soll-Protokoll geben auch Hinweise für die Fehlerdiagnose.

Die Genauigkeit der Überprüfung und damit die Aussagekraft der Protokolle, auch für die Fehlerdiagnose, läßt sich nicht nur durch die Anzahl der Kontrollpunkte erhöhen, sondern auch durch Verwendung von Doppelstrahlen, die an jedem Kontrollpunkt mehrere Strahlenkreuzungspunkte ergeben, wobei die Auswertung mit Doppelsensoren die Überwachung jedes solchen Kreuzungspunktes erlaubt.

Die Anzahl der Kontrollpunkte richtet sich nach dem Bewegungsprogramm des Roboters und nach der gewünschten Genauigkeit der Überprüfung des gesamten Bewegungsprogramms. Entsprechend ist die Anzahl der Strahlsender und -sensoren und die Anordnung der Kontrollpunkte in der Matrix zu wählen. Zur Einsparung von Strahlsendern und -sensoren kann man gegebenenfalls auch mit Umlenkspiegeln arbeiten, wo die örtlichen Bedingungen dies zulassen und die Mehrdeutigkeit der Strahlunterbrechung (von Originalstrahl und gespiegelten Strahlen) nicht zu Interpretationsfehlern führt, beispielsweise wenn man weiß, wo die Strahlunterbrechungsimpulse der Sensoren zu erwarten sind.

Das erfindungsgemäße Überprüfungsprinzip eignet sich weitgehend für die Überprüfung von Produktionsrobotern, beispielsweise an Fertigungsstraßen. Ein spezieller Anwendungsfall liegt bei Lackierrobotern für Autokarosserien, die in einer Lackierkabine arbeiten. Ein solches Ausführungsbeispiel sei im folgenden anhand der beiliegenden Zeichnungen betrachtet. Es zeigen:

Fig. 1    ein Anordnungsschema von Strahlensendern und -sensoren zur Bildung einer Matrix von Kontrollpunkten für den Fall einer Lackierkabine;

Fig. 2    Diagramme von Sensorsignalen und Tachosignalen des Roboters der erfindungsgemäßen Prüfanordnung und

Fig. 3    eine schematische Darstellung einer mit Doppelstrahlen arbeitenden Einrichtung.

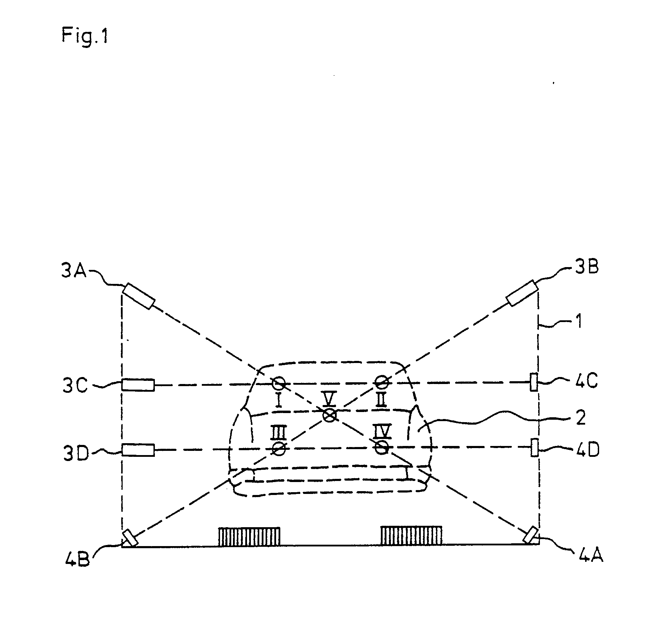

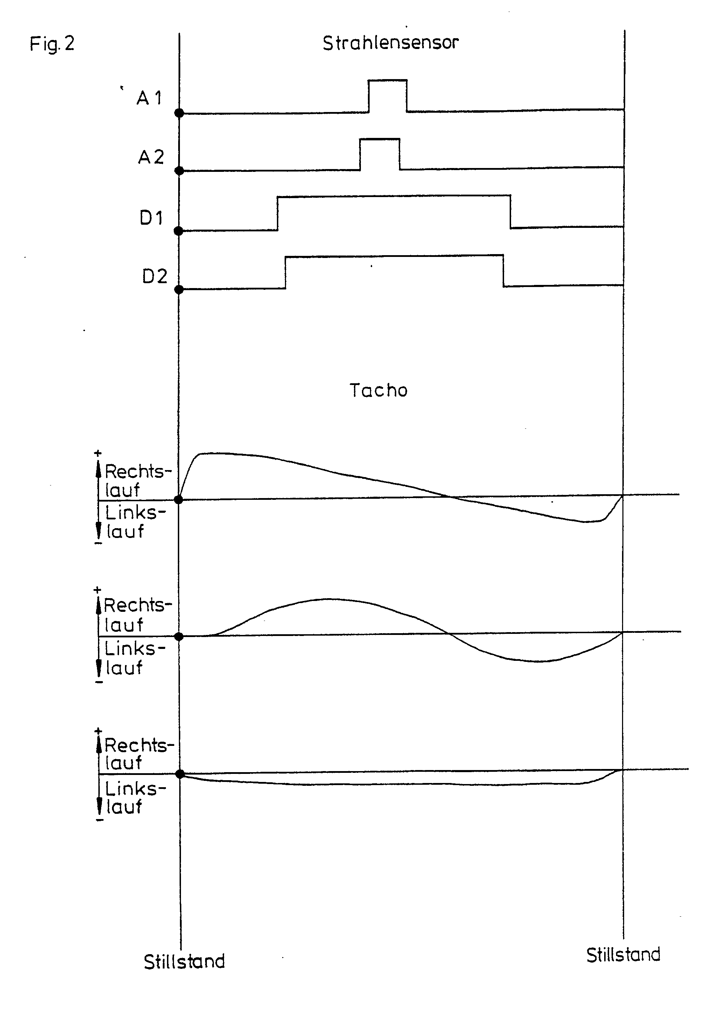

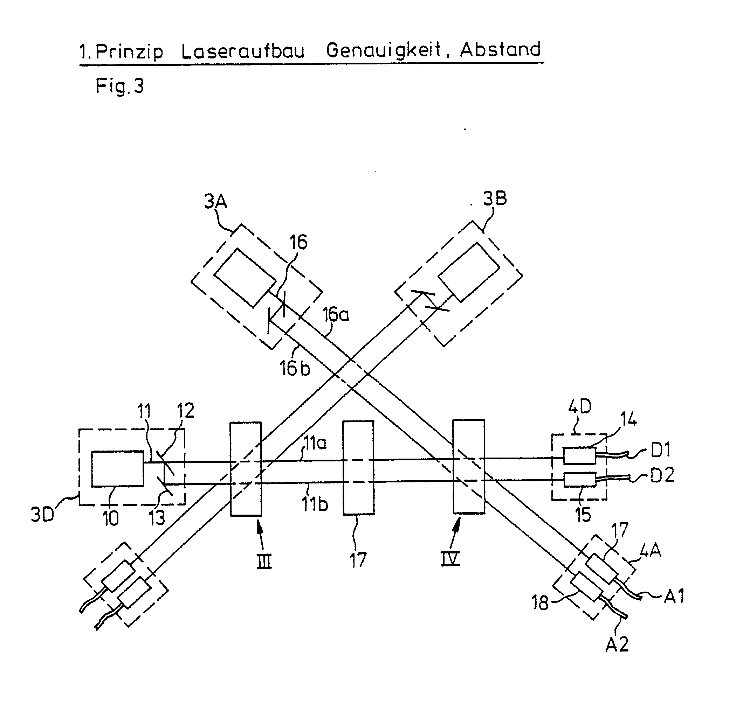

Fig. 1 zeigt schematisch eine Lackierkabine 1, in der eine Autokarosserie 2 als vom Roboter zu lackierendes Werkstück gestrichelt angedeutet ist. Quer zur Vorschubrichtung der Karosserie wird eine räumlich feste Matrix aus Kontrollpunkten I, II, III, IV und V gebildet, welche durch Kreuzungspunkte von Lichtstrahlen definiert sind, die von als Strahlensender dienenden Lichtquellen 3A, 3B, 3C und 3D ausgehen und von entsprechenden Sensoren 4A, 4B, 4C bzw. 4D empfangen werden. Anstelle von Lichtstrahlen können auch Laserstrahlen verwendet werden. Der Roboter und das von ihm bewegte Werkzeug sind hier nicht dargestellt, um die Übersichtlichkeit der Zeichnung nicht zu beeinträchtigen. Man kann sich jedoch ohne weiteres vorstellen, daß das Roboterwerkzeug nacheinander an den auf seinen Bewegungsbahnen liegend gewählten Kontrollpunkten I bis V eintrifft und die auf die jeweiligen Sensoren gerichteten beiden Strahlen unterbricht. Beispiele entsprechender Sensorsignale sind in Fig. 2 oben dargestellt, und zwar für den Fall von Doppelstrahlen gemäß Fig. 3. Die hohen Pegel der Sensorsignale mögen eine Strahlunterbrechung, die niedrigen Pegeln eine Strahldurchgängigkeit bedeuten. Aus dem zeitlichen Verlauf der Sensorausgangssignale ist somit ersichtlich, wann das Roboterwerkzeug den jeweiligen Strahl unterbricht, so daß sowohl das räumliche Eintreffen als auch der Zeitpunkt des Eintreffens des Werkzeugs am Kontrollpunkt festgestellt und durch Aufzeichnung der Sensorsignale protokolliert werden kann. Von dem durch die Gesamtheit der Sensorsignale gebildeten Protokoll sind in Fig. 2 als Beispiel nur die Signale der Sensoren 4A und 4D veranschaulicht, die als Doppelsensoren jeweils zwei Ausgangssignale liefern, welche mit dem Zusatz 1 und 2 bezeichnet sind. Außerdem sind in Fig. 2 unten drei Tachometersignale für Bewegungselemente des Roboters aufgezeichnet, während die tatsächliche Anzahl der Bewegungselemente und entsprechenden Tachometer natürlich meist größer ist. Aus der Zuordnung dieser Tachometersignale, welche Bewegungsgeschwindigkeit und Bewegungsrichtung der Roboterglieder darstellen, zu den Sensorsignalen läßt sich ermitteln, bei welcher Geschwindigkeit und Bewegungsrichtung der einzelnen Glieder das Werkzeug den jeweiligen Strahl unterbricht.

Bei der Endprüfung des am Produktionsort installierten Roboters wird nach der genauen Überprüfung sämtlicher Roboterbewegungen mit einer Prüfeinrichtung, die sich nur Roboterhersteller oder ganz große Anwender leisten können, die Matrix der Kontrollpunkte festgelegt, welche zweckmäßigerweise auf Bewegungsbahnen des Roboterwerkzeugs liegen, die im tatsächlichen Betrieb durchlaufen werden. Die in Fig. 1 dargestellte Matrix der Kontrollpunkte I bis V ist lediglich ein willkürliches Beispiel zur Veranschaulichung der Erfindung. Beim Durchfahren dieser Matrix wird ein Protokoll entsprechend Fig. 2 aufgenommen, welches ein authentisches Soll-Protokoll darstellt, mit dem später aufzunehmende Protokolle verglichen werden. Das Soll-Protokoll kann auch gleichzeitig mit dem bei der Endkontrolle durchgeführten Prüfprogramm aufgenommen werden.

Soll später im Betrieb die Bahntreue des vom Roboter geführten Werkzeugs nachgeprüft werden, dann nimmt man in einer Arbeitspause, beispielsweise zwischen zwei Schichten, ein Ist-Protokoll bei leerlaufendem Roboter, also ohne Bearbeitung eines Werkstücks, auf, welches man dann mit dem Soll-Protokoll vergleichen kann; dies kann sehr einfach durch Übereinanderlegen der Aufzeichnungen von Soll- und Ist-Protokoll und Sichtprobe auf Deckungsgleichheit erfolgen. Dieser Vorgang kann durch den Rechner im Testsystem automatisiert werden. Aus der Art eventueller Abweichungen des Ist-Protokolls vom Soll-Protokoll lassen sich Rückschlüsse auf Art und gegebenenfalls Ursache des Fehlers schließen. Während die Übereinstimmung der Unterbrechung beider sich im Kontrollpunkt durchkreuzender Strahlen anzeigt, daß das Prüfwerkzeug den Kontrollpunkt durchläuft und damit eine Positionierungskontrolle ergibt, läßt sich aus der zeitlichen Lage der Strahlunterbrechungs-bzw. Strahlfreigabeflanken der Sensorsignale ersehen, wann der Kontrollpunkt erreicht und wieder verlassen wird, so daß auch der zeitliche Bahnverlauf des Prüfwerkzeugs überprüft werden kann. Aus dem Vergleich von Ist- und Sollprotokoll kann man feststellen

1) Abweichungen beim Positionieren,

2) Abweichungen der Achsgeschwindigkeit für jede Achse getrennt,

3) Abweichungen der Zeit bis zum Erreichen der Position,

4) Abweichungen bezogen auf einzelne Achsen, und es lassen sich gewinnen

5) Meldungen zur vorbeugenden Instandhaltung,

6) Trendmeldungen über Abweichungen,

7) Hinweise über mögliche Fehlerursachen für jede Achse getrennt.

Fig. 3 zeigt eine spezielle Ausbildung der Strahlen als Doppelstrahlen, die an jedem Kontrollpunkt, hier dargestellt für die Kontrollpunkte III und IV, mehrere Strahldurchkreuzungspunkte ergeben. Der hier als Beispiel herangezogene Strahlensender 3D aus Fig. 1 enthält eine Strahlenquelle 10, die einen Licht- oder Laserstrahl 11 aussendet, der mit Hilfe eines halbdurchlässigen Spiegels 12 und eines normalen Spiegels 13 in zwei Teilstrahlen 11A und 11B aufgeteilt wird. Der gegenüberliegende Sensor 4D enthält für jeden Teilstrahl ein eigenes Sensorelement 14 bzw. 15, deren Sensorausgangssignale mit D1 bzw. D2 entsprechend den Angaben in Fig. 2 bezeichnet sind. In Fig. 3 sind ferner die beiden Diagonalstrahlen angedeutet, die von den Strahlensendern 3A bzw. 3B kommen und von denen der erstere mit 16 bezeichnet und durch zwei Teilstrahlen 16A und 16B gebildet wird. Der zugehörige Sensor 4A enthält wiederum zwei Sensorelemente 17 und 18, deren Ausgangssignale - entsprechend Fig. 2 -mit A1 bzw. A2 bezeichnet sind. An jedem Kontrollpunkt bilden die beiden Doppelstrahlen jeweils vier einzelne Durchkreuzungspunkte, wie in Fig. 3 für die Kontrollpunkte III und IV gezeigt ist, und wenn das mit 17 bezeichnete Prüfwerkzeug des Roboters die Kontrollpunkte III oder IV durchläuft, dann werden diese einzelnen Schnittpunkte nacheinander durchfahren, so daß man eine größere Auflösung der Verhältnisse am Kontrollpunkt und somit eine Art Lupeneffekt im Protokoll erreicht, womit genauere Aussagen möglich sind.

**Ansprüche**

1. Verfahren zum Überprüfen der Genauigkeit programmierter Bewegungen eines Roboters mit Hilfe eines Prüfprogrammes, bei dem die Ist-Bewegungen eines Roboterprüfwerkzeugs ermittelt und mit durch ein Testprogramm bestimmten Sollbewegungen verglichen werden, **dadurch gekennzeichnet,** daß das Roboterprüfwerkzeug bei dem Prüfprogramm ausgewählte, durch Kreuzungspunkte raumfester Strahlen definierte Kontrollpunkte seiner Bewegungsbahn durchläuft, daß diese Punkte durch Sensoren überwacht werden und Unterbrechungen der Strahlen durch das Prüfwerkzeug abgefühlt und durch Erzeugung entsprechender Unterbrechungssignale in Form eines zeitlichen Ist-Protokolls angezeigt werden, und daß dieses Ist-Protokoll mit einem Soll-Protokoll verglichen wird.

2. Verfahren nach Anspruch 1, dadurch gekennzeichnet, daß das Ist-Protokoll durch Aufzeichnung der Strahlensensorsignale erstellt wird.

3. Verfahren nach Anspruch 1, dadurch gekennzeichnet, daß die Roboter-Ist-Bewegung mit Geschwindigkeitssensoren abgefühlt und durch einen Eintrag im Ist-Protokoll angezeigt wird.

4. Verfahren nach Anspruch 1, 2 oder 3, dadurch gekennzeichnet, daß die Strahlen als Doppelstrahlen erzeugt und abgefühlt werden, wobei an jedem Kontrollpunkt mehrere räumlich benachbarte Strahlenkreuzungspunkte auftreten und auf Unterbrechung der Teilstrahlen überwacht werden.

5. Vorrichtung zum Überprüfen der Genauigkeit programmierter Bewegungen eines Roboters mit Hilfes eines Prüfprogrammes, bei dem die Ist-Bewegungen eines Roboterprüfwerkzeugs ermittelt und mit durch ein Testprogramm bestimmten Soll-Bewegungen verglichen werden, nach Anspruch 1, **gekennzeichnet durch** mindestens zwei derart angeordnete Strahlensender (3A, 3B, 3C, 3D), daß sich ihre Strahlen in mindestens einem in der Bewegungsbahn des Roboterprüfwerkzeugs liegenden Kontrollpunkt durchkreuzen, sowie den Strahlen zugeordnete Sensoren (4A, 4B, 4C, 4D) zum Feststellen von Strahlunterbrechungen und zur Lieferung entsprechender Unterbrechungssignale, und durch eine Einrichtung zur Erstellung eines zeitlichen Ist-Protokolls der Unterbrechungssignale zum Vergleich mit einem Soll-Protokoll.

6. Vorrichtung nach Anspruch 5, insbesondere zur Verwendung in einer Spritzkabine, dadurch gekennzeichnet, daß ein erster und ein zweiter Strahlensensor (3A, 3B) diagonal mit einem Querschnitt des Arbeitsbereiches durchlaufenden und sich etwa in dessen Mitte kreuzenden Strahlen ausgerichtet sind und ein erster und ein zweiter Sensor (4A, 4B) dem entsprechenden Strahlensender gegenüberliegend angeordnet sind, und daß ein dritter und vierter Strahlensender (3C, 3D) mitden Querschnitt waagerecht in verschiedenen Höhen durchlaufenden Strahlen in solcher Ausrichtung angeordnet sind, daß ihre Strahlen die Strahlen des ersten und zweiten Strahlensenders in vier Kontrollpunkten (I, II, III, IV) kreuzen, derart, daß eine räumlich feste Matrix von Kontrollpunkten gebildet wird, und daß dem dritten und vierten Strahlensender jeweils gegenüberliegend ein dritter und ein vierter Sensor (4C, 4D) angeordnet sind.

7. Vorrichtung nach Anspruch 5 oder 6, dadurch gekennzeichnet, daß jeder Strahlensender mit einem einen Doppelstrahl (11a, 11b; 16a, 16b) erzeugenden Strahlenteiler (12, 13) versehen ist und jedem solchen Doppelstrahl ein Sensor mit zwei getrennten entsprechenden Sensorelementen (14, 15; 17, 18) zugeordnet ist.

8. Vorrichtung zur Durchführung des Verfahrens nach Anspruch 5, 6 oder 7, gekennzeichnet durch mindestens einen an jeder Bewegungsachse des Roboters angebrachten Geschwindigkeitssensor.

## Claims

1. Method of checking the accuracy of programmed movements of a robot with the aid of a checking programme in which the actual movements of a robot check tool are determined and compared with desired movements determined by a test programme, characterised in that in the check programme the robot check tool passes through selected check Points on its path of movement defined by intersection points of spatially fixed beams, that these points are monitored by sensors and interruptions of the beams by the check tool are sensed and indicated by producing corresponding interruption signals in the form of a temporal actual record and that this actual record is compared with a desired record.

2. Method as claimed in claim 1, characterised in that the actual record is produced by plotting the beam sensor signals.

3. Method as claimed in claim 1, characterised in that the actual robot movement is sensed with velocity sensors and indicated by an entry in the actual record.

4. Method as claimed in claim 1,2 or 3, characterised in that the beams are produced as double beams and sensed, whereby a plurality of spatially adjacent beam intersection points are produced at each check point and are monitored for interruption of the component beams.

5. Apparatus for checking the accuracy of programmed movements of a robot with the aid of a checking programme in which the actual movements of a robot check tool are determined and compared with desired movements determined by a test programme as claimed in claim 1, characterised by at least two beam emitters (3A,3B,3C,3D) so arranged that their beams intersect in at least one check point lying in the path of movement of the robot check tool and sensors (4A,4B,4C,4D) associated with the beams for detecting beam interruptions and for producing corresponding interruption signals and by a device for producing a temporal actual record of the interruption signals for comparison with a desired record.

6. Apparatus as claimed in claim 5, particularly for use in a spraying cabin, characterised in that a first and a second beam sensor (3A,3B) are aligned diagonally with beams traversing a cross-section of the working region and intersecting approximately in its centre and a first and a second sensor (4A,4B) are arranged opposed to the corresponding beam emitter, and that a third and fourth beam emitter (3C,3D) are arranged with the beams traversing the cross-section horizontally at different heights in such an orientation that their beams intersect with the beams of the first and second beam emitter in four check points (I,II,III,IV) such that a spatially fixed matrix of check points is formed and that a third and a fourth sensor (4C,4D) are arranged respectively opposed to the third and fourth beam emitter.

7. Apparatus as claimed in claim 5 or 6, characterised in that each beam emitter is provided with a beam splitter (12,13) producing a double beam (11A,11B;16A,16B) and a sensor with two separate corresponding sensor elements (14,15;17,18) is associated with each such double beam.

8. Apparatus for carrying out a method as claimed in claim 5,6 or 7, characterised by at least one velocity sensor mounted on each axis of movement of the robot.

## Revendications

1. Procédé pour vérifier la précision des déplacements programmés d'un robot, a l'aide d'un programme de vérification dans lequel les déplacements réels d'un outil de vérification du robot sont déterminés et comparés à des déplacements de consigne, déterminés par un programme de test, caractérisé en ce que l'outil de vérification du robot traverse, lors du programme de vérification, des points de contrôle sélectionnés, définis par des points de croisement de rayons fixes dans l'espace, en ce que ces points sont contrôlés par des capteurs et les interruptions des rayons sont palpés par l'outil de vérification et affichés, par génération de signaux d'interruption correspondants, sous la forme d'un protocole réel chronologique et en ce que ce protocole réel est comparé à un protocole de consigne.

2. Procédé selon la revendication 1, caractérisé en ce que le protocole de consigne est établi par enregistrement des signaux des capteurs de rayons.

3. Procédé selon la revendication 1, caractérisé en ce que le déplacement réel du robot est palpé par des capteurs de vitesse et indiqué par un enregistrement au protocole réel.

4. Procédé selon la revendication 1, 2 ou 3, caractérisé en ce que les rayons sont produits et palpés sous la forme de rayons doubles, à chaque point de contrôle se produisant plusieurs points de croisement de rayons, voisins dans l'espace et l'interruption des parties de rayon étant contrôlée.

5. Dispositif pour vérifier la précision des déplacements programmés d'un robot, à l'aide d'un programme de vérification dans lequel les déplacements réels d'un outil de vérification du robot sont déterminés et comparés à des déplacements de consigne, déterminés par un programme de test, selon la revendication 1, caractérisé par au moins deux émetteurs de rayons (3A, 3B, 3C, 3D), disposés de manière telle que leurs rayons se croisent en au moins un point de contrôle situé sur la voie de déplacement de l'outil de vérification de robot, ainsi que par des capteurs (4A, 4B, 4C, 4D), associés aux rayons, destinés & constater les interruptions de rayons et à fournir des signaux d'interruption correspondants et par un dispositif d'établissement d'un Protocole réel chronologique des signaux d'interruption, à comparer avec un protocole de consigne.

6. Dispositif selon la revendication 5, à utiliser notamment dans une cabine de peinture par pulvérisation, caractérisé en ce qu'un premier et un deuxième capteur de rayons (3A, 3B) sont orientés en diagonale avec des rayons traversant une section transversale de la zone de travail et se croisant à peu près en son milieu et en ce qu'un premier et un deuxième capteur (4A, 4B) sont disposés face à l'émetteur de rayons correspondant, et en ce qu'un troisième et un quatrième émetteur de rayons (3C, 3D) avec des rayons traversant horizontalement la section transversale, à différentes hauteurs, sont orientés de manière que leurs rayons croisent les rayons du premier et du deuxième émetteur de rayons, en quatre point de contrôle (I, II, III, IV), de manière à former une matrice, fixe dans l'espace, de points de contrôle et en ce qu'un troisième et un quatrième capteur (4C, 4D) sont disposés respectivement face au troisième et au quatrième émetteur de rayons.

7. Dispositif selon la revendication 5 ou 6, caractérisé en ce que chaque émetteur de rayons est pourvu d'un diviseur de rayons (12, 13), produisant un double rayon (11a, 11b ; 16a, 16b) et en ce qu'un capteur comportant deux éléments de capteur correspondants séparés (14, 15 ; 17, 18) sont associés à chaque double rayon.

8. Dispositif pour la mise en oeuvre du procédé suivant la revendication 5, 6 ou 7, caractérisé par au moins un capteur de vitesse, placé sur chaque axe de déplacement du robot.

Fig.1

Fig. 2

Strahlensensor

Tacho

Stillstand

Stillstand

1. Prinzip  Laseraufbau   Genauigkeit, Abstand

Fig. 3